# EUROPÄISCHE PATENTSCHRIFT

(11) **EP 2 620 795 B1**
(45) Veröffentlichungstag und Bekanntmachung des Hinweises auf die Patenterteilung: **26.06.2019**
(21) Anmeldenummer: 12196128.8
(22) Anmeldetag: 07.12.2012
(51) Int. Cl.: G02B 7/18

(54) **Optische Spiegel-Baugruppe zur Strahlführung sowie Spiegel-Temperiervorrichtung mit einer derartigen Spiegel-Baugruppe**
Optical mirror assembly for beam guidance and mirror tempering device with such a mirror assembly
Composant de miroir optique destiné au guidage de rayon ainsi que dispositif d'équilibrage de miroir avec un tel composant de miroir

(30) Priorität: 27.01.2012 DE 102012201221
(43) Veröffentlichungstag der Anmeldung: 31.07.2013
(73) Patentinhaber: Carl Zeiss SMT GmbH, 73447 Oberkochen (DE)
(72) Erfinder: Laufer, Timo, 70180 Stuttgart (DE); Kneer, Aron, 76131 Karlsruhe (DE)
(74) Vertreter: Rau, Schneck & Hübner Patentanwälte Rechtsanwälte PartGmbB

(56) Entgegenhaltungen:
- US-A- 4 606 620
- US-A- 4 770 521
- US-A- 5 002 378
- US-A- 5 094 519
- US-A- 5 123 982
- DATABASE WPI Week 201102 Thomson Scientific, London, GB; AN 2010-P09025 XP002696527, -& CN 101 859 976 A (UNIV HUAZHONG SCI&TECHNOLOGY) 13. Oktober 2010 (2010-10-13)
- ROSENFELD J H ET AL: "POROUS MEDIA HEAT EXCHANGERS FOR COOLING OF HIGH-POWER OPTICAL COMPONENTS", OPTICAL ENGINEERING, SOC. OF PHOTO-OPTICAL INSTRUMENTATION ENGINEERS, BELLINGHAM, Bd. 34, Nr. 2, 1. Februar 1995 (1995-02-01), Seiten 335-341, XP000490722, ISSN: 0091-3286, DOI: 10.1117/12.194100

## Beschreibung

Die Erfindung betrifft eine optische Spiegel-Baugruppe zur Strahlführung optischer Strahlung. Ferner betrifft die Erfindung eine Spiegel-Temperiervorrichtung mit einer derartigen Spiegel-Baugruppe.

Derartige Spiegel-Baugruppen sind bekannt beispielsweise aus der US 8,057,053 B2, der US 2011/0181851 A1 und der WO 2010/108 612 A1. Die US 5,002,378 beschreibt einen gekühlten Spiegel. Die US 2009/0103063 A1 beschreibt eine Kühleinrichtung zur Kühlung einer optischen Komponente am Beispiel eines Spiegels. Gekühlte Spiegel sind aus folgenden Druckschriften bekannt: US 4,770,521 A, US 5,123,982 A, CN 101859976 A, US 5,094,519 A und US 4,606,620 A.

Es ist eine Aufgabe der vorliegenden Erfindung, eine optische Spiegel-Baugruppe derart weiterzubilden, dass ein Temperaturniveau einer Reflexionsfläche der Spiegel-Baugruppe und/oder ein Temperaturgradient, der über die Reflexionsfläche vorhanden ist, an anspruchsvolle Vorgaben angepasst werden kann.

Diese Aufgabe ist erfindungsgemäß gelöst durch eine optische Spiegel-Baugruppe mit den in Anspruch 1 angegebenen Merkmalen.

Die erfindungsgemäße Spiegel-Baugruppe kann zur Führung von Strahlung beliebiger Wellenlänge, insbesondere von Strahlung im Bereich einer Wellenlänge von 10,6 µm sowie von EUV-(Extremes Ultraviolett)Strahlung innerhalb einer EUV-Projektionsbelichtungsanlage, beispielsweise zur Führung von Strahlung in einem Wellenbereich zwischen 5 nm und 30 nm, zum Einsatz kommen. Die Spiegel-Baugruppe kann insbesondere zur Führung von MIR-Strahlung innerhalb eines Materialbearbeitungslasersystems, beispielsweise zur Führung von Strahlung im Bereich einer Wellenlänge von 10,6 µm, zum Einsatz kommen. Die Reflexionsfläche des Spiegel-Grundkörpers kann eine Fläche des Spiegel-Grundkörpers selbst sein oder kann über eine Verbindungsschicht oder über eine Verbindungsstruktur vom Spiegel-Grundkörper getragen werden. Der Festkörperschaumbereich ermöglicht eine Optimierung einer wärmeübertragenden Oberfläche und eine Optimierung eines Wärmeübertragungskoeffizienten, insbesondere von einem Wärmeträgerfluid auf den Spiegel-Grundkörper. Der Festkörperschaum ermöglicht eine Gewichtseinsparung bei gleichzeitig hoher Steifigkeit des Spiegel-Grundkörpers. Der Festkörperschaum kann zur Durchströmung eines Wärmeträgerfluids genutzt werden, wobei in der Regel eine Schwingungsanregung des Spiegel-Grundkörpers mit störenden, insbesondere mit niedrigen Frequenzen, vermindert ist. Auch ein Druckverlust zwischen einem Wärmeträger-Zuführkanal und einem Wärmeträger-Abführkanal kann durch eine entsprechende Auswahl und Anpassung des Festkörperschaums optimiert werden. Insgesamt lässt sich über den Festkörperschaum beispielsweise ein Turbulenzgrad sowie Geschwindigkeitsgradienten des durchströmenden Wärmeträgerfluids vorgeben. Es resultiert eine Spiegel-Baugruppe, deren Spiegel-Grundkörper hinsichtlich seines thermischen Verhaltens an Vorgabewerte angepasst werden kann. Bei dem Festkörperschaum kann es sich um einen offenporigen Schaum handeln. Bei der Fluidquelle kann es sich um eine externe Fluidquelle handeln, die separat von der Spiegel-Baugruppe angeordnet ist. Mehrere Festkörperschaum-Unterbereiche erhöhen die Anzahl der zur Vorgabe definierter Temperaturverhältnisse an der Reflexionsfläche zur Verfügung stehenden Freiheitsgrade. Ein zu minimierender oder zu verhindernder Wärmestrom kann entweder direkt durch einen Wärmeträgerfluid-Übertritt, also durch einen Fluidstrom zwischen den benachbarten Festkörperschaum-Unterbereichen, und/oder indirekt durch einen Wärmeleitungs-Übergang, also durch einen Wärmestrom allein durch die Wärmeleitung zwischen den benachbarten Festkörperschaum-Unterbereichen, erfolgen.

Unterschiedliche Materialien ergeben einen weiteren Freiheitsgrad zur Vorgabe einer definierten Temperatur- bzw. Wärmeabführungsverteilung. Alternativ oder zusätzlich können die verschiedenen Festkörperschaum-Unterbereiche mit unterschiedlichen Porengrößen und/oder Porengrößenverteilungen ausgebildet sein.

Ein Metallschaum nach Anspruch 2 stellt eine besonders geeignete Variante eines Festkörperschaums dar. Der Metallschaum kann aus prinzipiell aus jedem beliebigen Metall wie z.B. Aluminium, aus Kupfer, aus Zink, aus Blei, aus Stahl oder aus Eisen sowie aus Mischungen hiervon hergestellt sein.

Eine Tragschicht nach Anspruch 3 verbessert eine Stabilität des Spiegel-Grundkörpers. Zusätzlich beeinflusst eine Dicke der Tragschicht eine Temperaturverteilung innerhalb der Tragschicht und somit eine Temperaturverteilung an der optischen Fläche. Des Weiteren beeinflusst die Dicke der Tragschicht ein Zeitverhalten einer Temperierung des Spiegelgrundkörpers bzw. der Reflexionsfläche. Die Tragschicht kann eine Dicke im Bereich zwischen 100 µm und 10 mm haben.

Dies gilt insbesondere für eine nach Anspruch 4 angeformte Tragschicht. Der Festkörperschaum kann stoffschlüssig und/oder kraftschlüssig mit der Tragschicht verbunden sein.

Eine Wärmeträgerfluid-Anströmung einer definierten Zone des Festkörperschaums nach Anspruch 5 ermöglicht einen optimalen Wärmeübergang dort, wo dies im normalen Anwendungsfall der Spiegel-Baugruppe am stärksten benötigt wird, in der Regel dort, wo die Wärmestromdichte von Wärme, die von der optischen Fläche (Reflexionsfläche) absorbiert wird, am größten ist. Bei der definierten Zone des Festkörperschaumbereichs kann es sich um eine zentrale Zone handeln.

Eine Mehrzahl von Zuführ-Fluidkanälen nach Anspruch 6 erlaubt einerseits einen effizienten Wärmeabtransport vom Spiegel-Grundkörper und ermöglicht es andererseits, eine vorgegebene Temperaturverteilung im Spiegel-Grundkörper bzw. an der Reflexionsfläche herbeizuführen.

Alternativ zu einer parallelen Anbindung der Festkörperschaum-Unterbereiche an die Fluidquelle nach Anspruch 7 ist auch eine sequenzielle Durchströmung der Festkörperschaum-Unterbereiche innerhalb ein und desselben Wärmeträgerfluid-Kreislaufs möglich. Diese verschiedenen Strömungsweg-Varianten können je nach den Anforderungen an die Temperaturverteilung der Reflexionsfläche ausgewählt werden.

Die Vorteile einer Spiegel-Temperiervorrichtung nach Anspruch 8 entsprechen denen, die vorstehend unter Bezugnahme auf die erfindungsgemäße Spiegel-Baugruppe bereits erläutert wurden.

Die Gestaltungen, insbesondere der Fluidquelle der Spiegel-Temperiervorrichtung, nach den Ansprüchen 9 bis 11 erhöhen nochmals die Freiheitsgrade bei der Vorgabe eines Temperaturniveaus und/oder eines Temperaturgradienten über die Reflexionsfläche des Spiegel-Grundkörpers sowie innerhalb des Spiegel-Grundkörpers selbst. Die Wärmeträgerfluidströme können unterschiedliche Temperaturen und/oder unterschiedliche Volumenströme aufweisen.

Generell ist jede beliebige Festkörperschaum-Unterbereichsanordnung denkbar die in einer beliebigen Art und Weise mit einem beliebigen Fluid und mit einem beliebigen Fluidstrom angeströmt werden, wobei die Fluide unterschiedlich temperiert sein können. Die Fluide können sich innerhalb des Festkörperschaums bzw. innerhalb der Festkörperschaum-Unterbereiche oder an jeder anderen beliebigen Stelle der Spiegelbaugruppe zumindest teilweise durchmischen. Die optische Spiegel-Baugruppe bzw. der Spiegel-Grundkörper bzw. die optische Fläche kann somit auf vorgegebene Art und Weise temperiert werden. Temperieren umfasst Heizen und Kühlen.

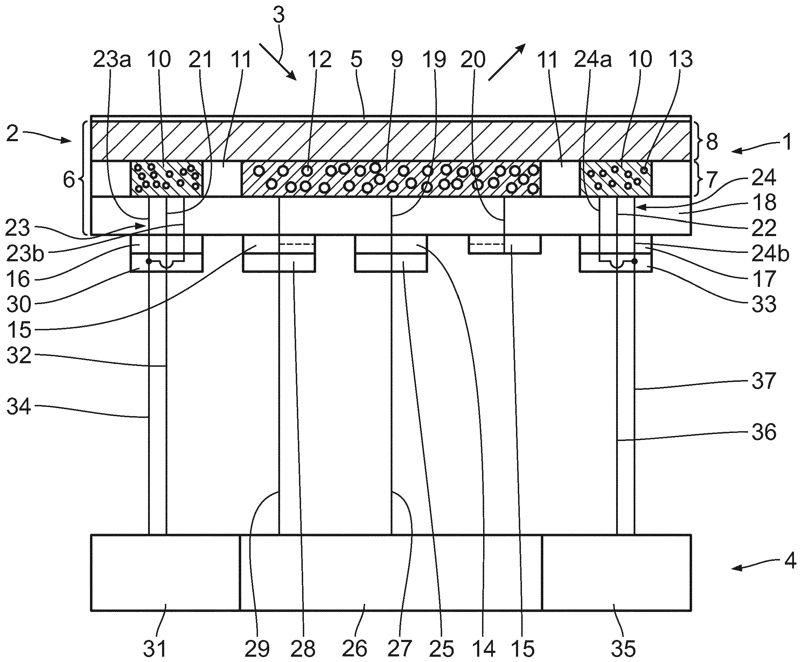

Ein Ausführungsbeispiel wird nachfolgend anhand der Zeichnung näher erläutert. Die einzige Figur zeigt in einem Querschnitt eine Spiegel-Temperiervorrichtung mit einer optischen Spiegel-Baugruppe zur Strahlführung.

Eine Spiegel-Temperiervorrichtung 1 hat eine optische Spiegel-Baugruppe 2 zur reflektierenden Führung einfallender Strahlung 3 und eine Fluidquelle 4 zur Erzeugung eines Fluidstroms eines Wärmeträgerfluids durch die Spiegel-Baugruppe 2. Die Fluidquelle 4 ist separat von der Spiegel-Baugruppe 2 angeordnet. Die Fluidquelle 4 ist in Bezug auf die Spiegel-Baugruppe 2 eine externe Fluidquelle.

Als Wärmeträgerfluid kommen alle üblichen Gase und Flüssigkeiten bzw. Gas- bzw. Flüssigkeitsgemische in Frage. Es können auch bereichsweise Flüssigkeiten und Gase kombiniert werden. Als Wärmerträgergas können zum Einsatz kommen: Luft, N₂, H₂, He oder auch ein anderes Edelgas. Als Wärmeträgerflüssigkeit können zum Einsatz kommen: Wasser bzw. wässrige Flüssigkeiten, Alkohole (z.B. Glykol), Öle.

Die Spiegel-Baugruppe 2 kann zur Führung von Strahlung beliebiger Wellenlänge, insbesondere von Strahlung im Bereich einer Wellenlänge von 10,6 µm sowie von EUV-Strahlung innerhalb einer EUV-Projektionsbelichtungsanlage dienen. Die Spiegel-Baugruppe 2 kann insbesondere zur Führung von MIR-Strahlung innerhalb eines Materialbearbeitungslasersystems dienen. Die Spiegel-Baugruppe 2 kann insbesondere dort eingesetzt werden, wo aufgrund insbesondere der verwendeten Wellenlänge der Strahlung 3 Energie von der Strahlung 3 auf die Spiegel-Baugruppe 2 zum Beispiel aufgrund von Restabsorption oder von Streuung übertragen wird und zu einer Erwärmung einer Reflexionsfläche 5 der Spiegel-Baugruppe 2 führt.

Die Spiegel-Baugruppe 2 hat einen Spiegel-Grundkörper 6, der die Reflexionsfläche 5 trägt. Die Reflexionsfläche 5 kann eine Fläche des Spiegel-Grundkörpers 6 selbst sein oder kann über eine Verbindungsschicht bzw. über eine Verbindungsstruktur vom Spiegel-Grundkörper 6 getragen werden. Die Reflexionsfläche 5 kann eine die Reflektivität der Spiegel-Baugruppe 2 steigernde Beschichtung, insbesondere eine Mehrlagen-(Multilayer)Beschichtung tragen.

Unterhalb der Reflexionsfläche 5, also der einfallenden Strahlung 3 abgewandt, hat der Spiegel-Grundkörper 6 abschnittsweise einen Festkörperschaumbereich 7. Dieser steht über eine Tragschicht 8 des Spiegel-Grundkörpers 6 mit der Reflexionsfläche 5 in wärmeleitender Verbindung.

Die Tragschicht 8 trägt die Reflexionsschicht 5. Die Tragschicht 8 und der Festkörperschaumbereich 7 bestehen aus dem gleichen Material, nämlich aus Metall. Bei einer alternativen Gestaltung können die Tragschicht 8 und der Festkörperschaumbereich 7 auch aus nichtmetallischen Material bestehen. Bei einer weiteren Variante können die Tragschicht 8 und der Festkörperschaumbereich 7 aus unterschiedlichen Materialien bestehen. Die Tragschicht 8 kann an den Festkörperschaumbereich 7 angeformt und ggf. stoff- bzw. kraftschlüssig mit ihm verbunden sein.

Prinzipiell kommen als Metallmaterialien für die Tragschicht 8 und den Festkörperschaumbereich 7 alle metallischen Werkstoffe in Frage, z.B. Aluminium, Kupfer, Messing und Stahl. Auch Kunststoffe können als Werkstoff für die Tragschicht 8 und/oder für den Festkörperschaumbereich 7 zum Einsatz kommen.

Der Festkörperschaumbereich ist in zwei Festkörperschaum-Unterbereiche 9, 10 unterteilt. Der Festkörperschaum-Unterbereich 9 stellt einen zentralen Abschnitt des Festkörperschaumbereiches 7 dar und ist einem zentralen Abschnitt der Reflexionsfläche 5 benachbart angeordnet. Der Festkörperschaum-Unterbereich 10 umgibt den zentralen Festkörperschaum-Unterbereich 9 ringförmig und ist einem entsprechend ringförmigen Randbereich der Reflexionsfläche 5 benachbart angeordnet. Zwischen den bei den Festkörperschaum-Unterbereichen 9, 10 ist ein ringförmiger Grenzbereich 11 angeordnet. Dieser dient zur Verhinderung eines direkten Fluid-Übertritts zwischen den benachbarten Festkörperschaum-Unterbereichen 9, 10, stellt also eine fluiddichte Sperre dar. Es können auch Übertrittszonen definiert werden, an denen ein Fluidaustausch zwischen den Bereichen möglich ist. Prinzipiell ist jede beliebige Anzahl und Anordnung von Festkörperschaum-Unterbereichen denkbar. Diese Anzahl bzw. Anordnung kann an die jeweiligen Anforderungen an die Spiegeltemperierung angepasst werden. Zwischen diesen Bereichen ist entweder kein oder, an definierten Übertrittszonen, doch ein Fluid-Übertritt möglich. Fluiddichte Sperren können auch derart ausgebildet sein, dass sie den Wärmeaustausch zwischen den Festkörperschaum-Unterbereichen begünstigen oder alternativ weitestgehend verhindern. Hierdurch ist ein weiterer Freiheitsgrad zur Beeinflussung einer Temperaturverteilung bzw. zur Beeinflussung von Temperaturgradienten bei der Temperierung der Spiegel-Baugruppe 2 gegeben. Der Festkörperschaum-Unterbereich 9 ist als offenporiger Schaum mit Poren 12 gebildet. Der Festkörperschaum-Unterbereich 10 ist als offenporiger Schaum mit Poren 13 gebildet. Eine typische Porengröße der Poren 12 ist größer als eine typische Porengröße der Poren 13.

Die Porengrößen werden nach gewünschtem Wärmeübergangskoeffizient bzw. nach gewünschtem Geschwindigkeitsgradient und nach dem erlaubten Druckverlust des Wärmeträgerfluids ausgewählt. Typisch sind 10/2,54, 15/2,54 oder 20/2,54 Poren pro Zentimeter [10, 15 oder 20 ppi (pores per inch)]. Die Porendichte beeinflusst auch die spezifische Dichte des Festkörperschaums und somit das Zeitverhalten des Temperiervorgangs der optischen Spiegel-Baugruppe bzw. des Spiegel-Grundkörpers bzw. der optischen Fläche.

Die Festkörperschaum-Unterbereich 9, 10 können aus dem gleichen Material bestehen, bestehen erfindungsgemäß aber aus unterschiedlichen Materialien. Neben einer Porengröße kann auch eine Porengrößenverteilung innerhalb der Festkörperschaum-Unterbereiche 9, 10 unterschiedlich sein.

Der Spiegel-Grundkörper 6 hat auf einer der Reflexionsfläche 5 abgewandten Seite mehrere Fluidanschlüsse 14, 15, 16, 17. Der Fluidanschluss 14 ist zentral auf einer Rückwand 18 der Spiegel-Baugruppe 2 angeordnet. Der Fluidanschluss 15 umgibt den Fluidanschluss 14 ringförmig. Die Fluidanschlüsse 16 und 17 sind im Randbereich auf der Rückwand 18 angeordnet.

Der Fluidanschluss 14 stellt einen Zuführ-Fluidanschluss dar, über den der zentrale Festkörperschaum-Unterbereich 9 mit der Fluidquelle 4 in Fluidverbindung steht. Der Fluidanschluss 15 stellt einen Abführ-Fluidanschluss dar, über den der zentrale Festkörperschaum-Unterbereich 9 mit der Fluidquelle 4 in Fluidverbindung steht. Die Fluidanschlüsse 16 und 17 stellen zwei parallele Zuführ- und Abführ-Fluidanschlüsse dar, über die der Festkörperschaum-Unterbereich 10 mit der Fluidquelle 4 in Fluidverbindung steht.

Ein Fluid-Zuführkanal-Abschnitt 19 verbindet den zentralen Festkörperschaum-Unterbereich 9 mit dem Fluidanschluss 14. Ein Fluid-Ringkanal-Abführabschnitt 20 verbindet den Fluidanschluss 15 mit einem Randbereich des zentralen Festkörperschaum-Unterbereichs 9.

Ein Fluid-Zuführkanal-Abschnitt 21 verbindet den Fluidanschluss 16 mit einem Abschnitt des Festkörperschaum-Unterbereichs 10. Ein Fluid-Zuführkanal-Abschnitt 22 verbindet den Fluidanschluss 17 mit einem gegenüberliegenden Abschnitt des Festkörperschaum-Unterbereichs 10.

Ein Fluid-Abführkanal-Abschnitt 23 mit Abführleitungen 23a, 23b verbindet den Festkörperschaum-Unterbereich 10 mit dem Fluidanschluss 16. Entsprechend verbindet ein Fluid-Abführkanal-Abschnitt 24 mit Abführleitungen 24a, 24b den Festkörperschaum-Unterbereich 10 mit dem Fluidanschluss 17.

Ein Gegen-Fluidanschluss 25 ist komplementär zum Fluidanschluss 14 ausgebildet und stellt eine Fluidverbindung zwischen dem Fluidanschluss 14 und einem Fluidquellen-Abschnitt 26 der Fluidquelle 4 über einen Zuführ-Fluidkanal 27 dar.

Ein Gegen-Fluidanschluss 28 ist komplementär zum Fluidanschluss 15 ausgebildet und stellt eine Fluidverbindung zwischen den Fluidanschluss 15 und dem Fluidquellen-Abschnitt 26 über einen Abführ-Fluidkanal 29 her.

Ein Gegen-Fluidanschluss 30 ist komplementär zum Fluidanschluss 16 ausgebildet und stellt eine Fluidverbindung des Fluidanschlusses 16 mit einem weiteren Fluidquellen-Abschnitt 31 der Fluidquelle 4 über einen Zuführ-Fluidkanal 32 und einen Abführ-Fluidkanal 34 her.

Ein Gegen-Fluidanschluss 33 ist komplementär zum Fluidanschluss 17 ausgebildet und stellt eine Fluidverbindung zwischen dem Fluidanschluss 17 und einem weiteren Fluidquellen-Abschnitt 35 der Fluidquelle 4 über einen Zuführ-Fluidkanal 36 und einen Abführ-Fluidkanal 37 her.

Der Fluidkanal-Abschnitt 19 des Fluidanschlusses 14 mündet zentral in den Festkörperschaum-Unterbereich 9 ein. Dies gewährleistet, dass ein zentraler Bereich bzw. ein Zentralabschnitt des zentralen Festkörperschaum-Unterbereichs 9, der einem Zentralabschnitt der Reflexionsfläche 5 benachbart angeordnet ist, mit Wärmeträgerfluid angeströmt wird.

Die Zuführ-Fluidkanäle 27, 32 und 36 dienen zur parallelen, also nicht sequenziellen, Zuführung von Wärmeträgerfluid hin zum Festkörperschaumbereich 7, also einerseits zum Festkörperschaum-Unterbereich 9 und andererseits zum Festkörperschaum-Unterbereich 10.

Die Festkörperschaum-Unterbereiche 9, 10 sind über jeweils einen eigenen Zuführ-Fluidkanal, nämlich einerseits über den Zuführ-Fluidkanal 27 und andererseits über die Zuführ-Fluidkanäle 32 und 36, mit der Fluidquelle 4 verbunden.

Über die Zuführ-Kanäle 27, 32 und 36 kann die Fluidquelle 4 mehrere Wärmeträgerfluidströme der Spiegel-Baugruppe 2 unabhängig zur Verfügung stellen. Diese Wärmeträgerfluidströme können unterschiedliche Temperaturen bzw. Volumenströme aufweisen. Die Fluidquelle 4 kann über die Fluidquellen-Abschnitte 26, 31 und 35 unterschiedliche Wärmeträgerfluide zur Verfügung stellen. Diese können unterschiedliche Viskositäten aufweisen.

Über den Fluidquellen-Abschnitt 26 wird ein erstes Wärmeträgerfluid über den Zuführ-Fluidkanal 27 und den Fluidkanal-Abschnitt 19 dem Festkörperschaum-Unterbereich 9 zugeführt. Das Wärmeträgerfluid strömt vom Zentrum bzw. von einer zentralen Zone des Festkörperschaum-Unterbereichs 9 im wesentlichen radial nach außen hin zum Rand des zentralen Festkörperschaum-Unterbereichs 9 und wird dort über den Fluid-Ringkanal-Abschnitt 20, einen Sammelanschluss im Fluidanschluss 15 und den Abführ-Fluidkanal 29 wieder zurück zum Fluidquellenabschnitt 26 geführt.

Über den Fluidquellen-Abschnitt 31 und den Zuführ-Fluidkanal 32 wird ein weiteres Wärmeträgerfluid dem Festkörperschaum-Unterbereich 10 zugeführt. Von dort abgeführt wird das Wärmeträgerfluid über den Fluid-Abführkanal-Abschnitt 23 und den Abführ-Fluidkanal 33. Ein entsprechender Fluidstrom ergibt sich, ausgehend vom Fluidquellen-Abschnitt 35 über den Zuführ-Fluidkanal 36, den Fluidanschluss 17, durch den gegenüberliegenden Bereich des Festkörperschaum-Unterbereichs 10 und den Abführ-Fluidkanal 37.

Über diese verschiedenen Wärmeträger-Kreisläufe lässt sich eine unabhängige und insbesondere abschnittsweise Temperierung der Reflexionsfläche 5 erreichen. Von den unterschiedlichen Abschnitten der Reflexionsfläche 5 kann jeweils eine vorgegebene Wärmemenge abgeführt werden.

## Patentansprüche

1. Optische Spiegel-Baugruppe (2) zur Strahlführung,
- mit einem Spiegel-Grundkörper (6), der eine Reflexionsfläche (5) trägt,
- wobei der Spiegel-Grundkörper (6) unterhalb der Reflexionsfläche (5) zumindest abschnittsweise einen Festkörperschaumbereich aufweist,
- der mit der Reflexionsfläche (5) in wärmeleitender Verbindung steht,
- wobei der Festkörperschaumbereich über mindestens einen Fluidanschluss (14 bis 17) mit einer Fluidquelle (4) verbindbar ist, die über mindestens einen Fluidkanal (27, 29; 32, 33; 36, 37) in Fluidverbindung mit dem Festkörperschaumbereich zur Erzeugung eines Fluidstroms mindestens eines Wärmeträgerfluids durch den Festkörperschaumbereich stehen kann,
- der Festkörperschaumbereich in mindestens zwei Festkörperschaum-Unterbereiche (9, 10) unterteilt ist, zwischen denen ein Grenzbereich (11) zur Minimierung oder Verhinderung eines direkten Wärmeträgerfluid-Übertritts zwischen benachbarten Festkörperschaum-Unterbereichen (9, 10) angeordnet ist,
- **dadurch gekennzeichnet, dass** die Festkörperschaum-Unterbereiche (9, 10) aus unterschiedlichen Materialien bestehen.

2. Baugruppe nach Anspruch 1, **dadurch gekennzeichnet, dass** der Festkörperschaumbereich als Metallschaum ausgebildet ist.

3. Baugruppe nach Anspruch 1 oder 2, **gekennzeichnet durch** eine Tragschicht (8), die die Reflexionsfläche (5) trägt, wobei die Tragschicht (8) und der Festkörperschaumbereich aus dem gleichen Material bestehen.

4. Baugruppe nach Anspruch 3, **dadurch gekennzeichnet, dass** die Tragschicht (8) an den Festkörperschaumbereich angeformt ist.

5. Baugruppe nach einem der Ansprüche 1 bis 4, **gekennzeichnet, durch** eine Fluidkanal-Anordnung (27, 29) derart, dass eine vordefinierte Zone (9) des Festkörperschaumbereichs, der der Reflexionsfläche (5) benachbart angeordnet ist, mit dem Wärmeträgerfluid angeströmt werden kann.

6. Baugruppe nach einem der Ansprüche 1 bis 5, **gekennzeichnet durch** eine Mehrzahl von Zuführ-Fluidkanälen (27, 32, 36) zur parallelen, also nicht sequenziellen, Zuführung des Wärmeträgerfluids hin zum Festkörperschaumbereich.

7. Baugruppe nach einem der Ansprüche 1 bis 6, **dadurch gekennzeichnet, dass** jeder der Festkörperschaum-Unterbereiche (9, 10) über mindestens einen eigenen Zuführ-Fluidkanal (27; 32, 36) mit der Fluidquelle (4) verbindbar ist.

8. Spiegel-Temperiervorrichtung (1)
- mit einer Spiegel-Baugruppe (2) nach einem der Ansprüche 1 bis 7,
- mit einer Fluidquelle (4), die über mindestens einen Fluidkanal (27, 29, 32, 33, 36, 37) in Fluidverbindung mit dem Festkörperschaumbereich (7) zur Erzeugung eines Fluidstromes eines Wärmeträgerfluids durch den Festkörperschaumbereich (7) steht.

9. Temperiervorrichtung nach Anspruch 8, **dadurch gekennzeichnet, dass** die Fluidquelle (4) mehrere unabhängige Wärmeträgerfluidströme zur Verfügung stellt.

10. Temperiervorrichtung nach Anspruch 9, **dadurch gekennzeichnet, dass** die Fluidquelle (4) unterschiedliche Wärmeträgerfluide zur Verfügung stellt.

11. Temperiervorrichtung nach Anspruch 10, **dadurch gekennzeichnet, dass** die Wärmeträgerfluide unterschiedliche Viskositäten aufweisen.

## Claims

1. Optical mirror assembly (2) for beam guiding,
- comprising a mirror main body (6) carrying a reflection surface (5),
- wherein the mirror main body (6) has a solid foam region at least in sections below the reflection surface (5),
- said solid foam region being thermally conductively connected to the reflection surface (5),
- wherein the solid foam region is connectable to a fluid source (4) via at least one fluid connection (14 to 17), which fluid source can be fluid-connected via at least one fluid channel (27, 29; 32, 33; 36, 37) to the solid foam region in order to produce a fluid flow of at least one heat transfer fluid through the solid foam region,
- the solid foam region is subdivided into at least two solid foam subregions (9, 10), between which is arranged a boundary region (11) for minimizing or preventing heat transfer fluid from crossing directly between adjacent solid foam subregions (9, 10),
- **characterized in that** the solid foam subregions (9, 10) consist of different materials.

2. Assembly according to Claim 1, **characterized in that** the solid foam region is embodied as metal foam.

3. Assembly according to Claim 1 or 2, **characterized by** a carrying layer (8), which carries the reflection surface (5), wherein the carrying layer (8) and the solid foam region consist of the same material.

4. Assembly according to Claim 3, **characterized in that** the carrying layer (8) is shaped onto the solid foam region.

5. Assembly according to any of Claims 1 to 4, **characterized by** a fluid channel arrangement (27, 29) in such a way that the heat transfer fluid can flow along a predefined zone (9) of the solid foam region arranged adjacent to the reflection surface (5).

6. Assembly according to any of Claims 1 to 5, **characterized by** a plurality of feed fluid channels (27, 32, 36) for the parallel, that is to say non-sequential, feeding of the heat transfer fluid towards the solid foam region.

7. Assembly according to any of Claims 1 to 6, **characterized in that** each of the solid foam subregions (9, 10) is connectable to the fluid source (4) via at least one dedicated feed fluid channel (27; 32, 36).

8. Mirror temperature-regulating device (1)
- comprising a mirror assembly (2) according to any of Claims 1 to 7,
- comprising a fluid source (4), which is fluid-connected via at least one fluid channel (27, 29, 32, 33, 36, 37) to the solid foam region (7) in order to produce a fluid flow of a heat transfer fluid through the solid foam region (7).

9. Temperature-regulating device according to Claim 8, **characterized in that** the fluid source (4) makes available a plurality of independent heat transfer fluid flows.

10. Temperature-regulating device according to Claim 9, **characterized in that** the fluid source (4) makes available different heat transfer fluids.

11. Temperature-regulating device according to Claim 10, **characterized in that** the heat transfer fluids have different viscosities.

## Revendications

1. Composant de miroir optique (2) destiné au guidage de faisceaux,
- comportant un corps de base de miroir (6) qui porte une surface de réflexion (5),
- dans lequel le corps de base de miroir (6) présente au moins par sections une zone de mousse solide en dessous de la surface de réflexion (5),
- qui est en liaison thermoconductrice avec la surface de réflexion (5),
- dans lequel la zone de mousse solide peut être reliée par l'intermédiaire d'au moins une liaison fluidique (14 à 17) à une source de fluide (4) qui peut être en communication fluidique avec la zone de mousse solide par l'intermédiaire d'au moins un canal fluide (27, 29 ; 32, 33 ; 36, 37) afin de générer un écoulement de fluide d'au moins un fluide caloporteur dans la zone de mousse solide,
- la zone de mousse solide est divisée en au moins deux sous-zones de mousse solide (9, 10) entre lesquelles est disposée une zone limite (11) servant à minimiser ou empêcher un transfert direct de fluide caloporteur entre des sous-zones de mousse solide (9, 10) voisines,
- **caractérisé en ce que** les sous-zones de mousse solide (9, 10) sont constituées de matériaux différents.

2. Composant selon la revendication 1, **caractérisé en ce que** la zone de mousse solide est réalisée sous la forme d'une mousse métallique.

3. Composant selon la revendication 1 ou 2, **caractérisé par** une couche de support (8) qui porte la surface de réflexion (5),
dans lequel la couche de support (8) et la région de mousse solide sont constituées du même matériau.

4. Composant selon la revendication 3, **caractérisé en ce que** la couche de support (8) est formée d'un seul tenant sur la zone de mousse solide.

5. Composant selon l'une des revendications 1 à 4, **caractérisé par** un agencement de canal de fluide (27, 29) permettant de faire en sorte qu'une zone prédéfinie (9) de la zone de mousse solide disposée de manière adjacente à la surface de réflexion (5) puisse être parcourue par le fluide caloporteur.

6. Composant selon l'une des revendications 1 à 5, **caractérisé par** une pluralité de canaux d'alimentation en fluide (27, 32, 36) permettant l'alimentation en parallèle, c'est-à-dire non séquentielle, en fluide caloporteur vers la zone de mousse solide.

7. Composant selon l'une des revendications 1 à 6, **caractérisé en ce que** chacune des sous-zones de mousse solide (9, 10) peut être reliée à la source de fluide (4) par au moins un canal d'alimentation en fluide (27 ; 32, 36) distinct.

8. Dispositif de régulation de température de miroir (1)
- comportant un composant de miroir (2) selon l'une des revendications 1 à 7,
- comportant une source de fluide (4) qui est en communication fluidique avec la zone de mousse solide (7) par l'intermédiaire d'au moins un canal de fluide (27, 29, 32, 33, 36, 37) pour générer un écoulement de fluide d'un fluide caloporteur dans la zone de mousse solide (7) .

9. Dispositif de régulation de température selon la revendication 8, **caractérisé en ce que** la source de fluide (4) fournit une pluralité de courants de fluide caloporteur indépendants.

10. Dispositif de régulation de température selon la revendication 9, **caractérisé en ce que** la source de fluide (4) fournit différents fluides caloporteurs.

11. Dispositif de régulation de température selon la revendication 10, **caractérisé en ce que** les fluides caloporteurs présentent des viscosités différentes.
